# EUROPEAN PATENT APPLICATION

(11) **EP 4 692 004 A1**
(43) Date of publication of application: **11.02.2026**
(21) Application number: 24783973.1
(22) Date of filing: 05.02.2024
(51) Int. Cl.: C02F 9/00, C02F 1/467, C02F 1/461, C02F 1/04, C02F 101/30

(54) **RESOURCE RECYCLING METHOD FOR HIGH-SALINITY WASTEWATER BY SOLAR-ENHANCED ELECTROCHEMICAL TREATMENT**

(30) Priority: 07.04.2023 CN 202310367290
(71) Applicant: Hu-Nan New Frontier Science & Technology Ltd., Changsha, Hunan 410000 (CN)
(72) Inventor: MA, Feng, Changsha, Hunan 410000 (CN); WANG, Jian, Changsha, Hunan 410000 (CN); WEI, Qiuping, Changsha, Hunan 410000 (CN); WANG, Baofeng, Changsha, Hunan 410000 (CN); LUO, Hao, Changsha, Hunan 410000 (CN); WU, Shuiping, Changsha, Hunan 410000 (CN); MA, Li, Changsha, Hunan 410000 (CN); YU, Dan, Changsha, Hunan 410000 (CN); TAN, Jilin, Changsha, Hunan 410000 (CN); YIN, Zhao, Changsha, Hunan 410000 (CN); WANG, Xiang, Changsha, Hunan 410000 (CN); ZHOU, Kechao, Changsha, Hunan 410000 (CN); YU, Zhiming, Changsha, Hunan 410000 (CN)
(74) Representative: Laufhütte, Dieter
(86) International application number: PCT/CN2024/075960
(87) International publication number: WO 2024/207888

(57) **Abstract**

The present disclosure relates to a method for resource recycling of high-salinity wastewater treated by a solar-enhanced electrochemical process. The method includes: step S1: subjecting the high-salinity wastewater to an ion membrane electrolysis process to generate a strongly oxidizing salt solution A; step S2: mixing the strongly oxidizing salt solution A with organic wastewater to obtain a mixed solution, and activating and degrading the mixed solution with a photothermal coupled activation degradation system to obtain an activated and degraded solution; step S3: degrading the activated and degraded solution through an electrochemical oxidation degradation component to obtain a high-salinity solution; step S4: evaporating and concentrating the high-salinity solution to obtain a high-salinity concentrate; step S5: subjecting the high-salinity concentrate to the ion membrane electrolysis process to generate a strongly oxidizing salt solution B; and Step S6: re-starting step S2 by using the strongly oxidizing salt solution B as the strongly oxidizing salt solution A and repeating step S2 to step S5.The method for resource recycling of high-salinity wastewater treated by the solar-enhanced electrochemical process of the present disclosure enables the resource utilization of the high-salinity wastewater and the degradation of refractory organic wastewater.

## Description

### TECHNICAL FIELD

The present disclosure relates to the technical field of high-salinity wastewater treatment, and in particular to a method for resource recycling of high-salinity wastewater treated by a solar-enhanced electrochemical process.

### BACKGROUND

In certain enterprises of coal chemical, metallurgical, printing and dyeing, and pharmaceutical industries, large volumes of high-salinity wastewater, including sulfates, chlorates, and manganates, are generated.Against the backdrop of energy conservation, emission reduction, and environmental protection, the zero-liquid discharge and resource-oriented treatment of high-salinity wastewater has become an inevitable trend in high-salinity wastewater treatment. Current desalination processes primarily rely on conventional circulating evaporation-crystallization technology. However, these processes suffer from large circulation volume, high energy consumption, and difficult control, especially poor stability in industrial wastewater treatment. Alternative approaches employing nanofiltration membrane-based hybrid processes have been proposed for sulfate-laden high-salinity wastewater, aiming to separate salts as chemical products. Nevertheless, such hybrid systems exhibit low separation efficiency and prolonged processing times, significantly limiting their applicability. More critically, the recovered salts often fail to achieve resource utilization, being instead classified as solid or even hazardous waste requiring further disposal. Similarly challenging are high-concentration refractory organic wastewaters, characterized by chemical stability and oxidation resistance. The treatment of both high-salinity and refractory organic wastewaters remains a persistent pain point in the wastewater treatment industry.

### SUMMARY

In view of the above, the objective of the present disclosure is to provide a method for resource recycling of high-salinity wastewater treated by a solar-enhanced electrochemical process, so as to address the issue of resource utilization of the high-salinity wastewater and utilize the treated high-salinity wastewater for organic wastewater treatment.

The present disclosure addresses the above issue by the following technical means:
A method for resource recycling of high-salinity wastewater by a solar-enhanced electrochemical treatment process, including: step S1: subjecting the high-salinity wastewater to an ion membrane electrolysis process to generate a strongly oxidizing salt solution A; step S2: mixing the strongly oxidizing salt solution A with organic wastewater to obtain a mixed solution, and activating and degrading the mixed solution with a photothermal coupled activation degradation system to obtain an activated and degraded solution; step S3: degrading the activated and degraded solution through an electrochemical oxidation degradation system to obtain a high-salinity solution; step S4: evaporating and concentrating the high-salinity solution to obtain a high-salinity concentrate; step S5: subjecting the high-salinity concentrate to the ion membrane electrolysis process to generate a strongly oxidizing salt solution B; and Step S6: re-starting step S2 by using the strongly oxidizing salt solution B as the strongly oxidizing salt solution A and repeating step S2 to step S5.

Furthermore, the ion membrane electrolysis process in the step S1 uses a strongly oxidizing salt solution electrosynthesis system (also referred to as an electrochemical synthesis system).The strongly oxidizing salt solution electrosynthesis system includes a cathode region and an anode region separated by a cation membrane. The strongly oxidizing salt solution is generated by electrolysis in the anode region. The cation membrane is configured to prevent the strongly oxidizing ions generated in the anode region from undergoing a reduction reaction at the cathode, while ensuring the circulation of protons in the aqueous solution and improving the electrolysis efficiency.

Furthermore, the cathode region includes a cathode module, and the anode region includes an anode module. The anode module is a single ultra-high oxygen evolution potential non-active electrode or a composite electrode composed of a plurality of ultra-high oxygen evolution potential non-active electrodes. Material of the cathode module is selected from one or more of stainless steel, titanium, niobium, tantalum, zirconium, copper, nickel, cobalt, tungsten, molybdenum, chromium, iron, gold, and silver. The single ultra-high oxygen evolution potential non-active electrode or the composite electrode is selected from one or a combination of a boron-doped diamond electrode array, a distributed boron-doped diamond/metal-based composite electrode, a titanium suboxide/doped diamond electrode, a doped diamond-ruthenium oxide coupled electrode, an iridium oxide-doped diamond dual-layer electrode, and a doped diamond-ruthenium oxide composite coating electrode. The cathode module includes a plurality of cathode electrode plates, the anode module includes a plurality of anode electrode plates, and an area ratio of a cathode electrode plate to an anode electrode plate is greater than or equal to 2.The area ratio is capable of increasing the current density of the anode at low potentials and increasing the current efficiency.

The distributed boron-doped diamond/metal-based composite electrode includes a metal sheet and a plurality of boron-doped diamond electrode plates distributed at intervals on a surface of the metal sheet, a lead suboxide coating is provided between the metal sheet and the plurality of boron-doped diamond electrode plates, and the metal sheet is selected from one of a titanium-clad copper sheet, a tantalum-clad copper sheet, a titanium sheet, a niobium sheet, a tantalum sheet, and a zirconium sheet; a structure of the metal sheet is selected from one of a continuous plate shape, a mesh shape, a discontinuous frame shape, a columnar shape, a barrel shape, an irregular three-dimensional shape, and a regular three-dimensional shape.

The titanium suboxide/doped diamond electrode includes a substrate and an electrode working layer disposed on a surface of the substrate, the electrode working layer is composed of a titanium suboxide layer and a doped diamond layer, titanium suboxide in the titanium suboxide layer is Magnéli phase titanium suboxide, a chemical formula of titanium oxide in the titanium suboxide layer is TiₙO₂ₙ₋ₓ, n is 1-5, x is 0-3, and doped diamond particles are dispersed in the titanium suboxide layer; in the electrode working layer, from bottom to top, the titanium suboxide layer and the doped diamond layer are sequentially arranged; or from bottom to top, the doped diamond layer and the titanium suboxide layer are sequentially arranged.

The doped diamond-ruthenium oxide coupled electrode includes a substrate and an electrode working layer disposed on a surface of the substrate, the electrode working layer has a double-layer film structure, from bottom to top, sequentially a ruthenium oxide layer and a doped diamond layer, and the ruthenium oxide layer is composed of a ruthenium oxide matrix and doped diamond particles uniformly dispersed in the ruthenium oxide matrix.

The iridium oxide-doped diamond dual-layer electrode includes a substrate and an electrode working layer disposed on a surface of the substrate, the electrode working layer is composed of an iridium oxide layer and a doped diamond layer, and the iridium oxide layer is composed of an iridium oxide matrix and doped diamond particles uniformly dispersed in the iridium oxide matrix.

The doped diamond-ruthenium oxide composite coating electrode includes a substrate and an electrode working layer disposed on a surface of the substrate, the electrode working layer has a double-layer film structure, from bottom to top, sequentially a doped diamond layer and a ruthenium oxide layer, and the ruthenium oxide layer is added with doped diamond particles.

A doping element in the doped diamond layer is selected from at least one of boron, nitrogen, phosphorus, and lithium, a doping manner of the doped diamond layer is selected from at least one of constant doping, multi-layer variable doping, and gradient doping, and a mass fraction of the doping element in the doped diamond layer is 2‰-10‰.

During an electrochemical oxidation process for producing a strongly oxidizing salt, the current efficiency is generally low (<50%) due to the presence of an oxygen evolution side reaction. However, a redox potential of a reaction of electrolytic generation of the strongly oxidizing salt is relatively high, and it is necessary to select an electrode material with a high oxygen evolution overpotential to realize electrochemical generation. A boron-doped diamond electrode with ultra-high oxygen evolution potential, high chemical inertness, and low adsorption, is an ideal anode material for an electrochemical preparation of the strongly oxidizing salt. A non-active boron-doped diamond with ultra-high oxygen evolution potential and its coupled electrode are used as the anode, and the electrolysis efficiency can reach up to 95%.

An oxidation reaction occurs in the anode module within the electrochemical synthesis system to oxidize a salt in the wastewater to a higher-valence strongly oxidizing inorganic salt; a reduction reaction occurs in the cathode module to reduce metal ions in the high-salinity wastewater to metal singletons, which are attached to the electrode.

Furthermore, a process for photothermal coupled activation degradation in the step S2 includes: mixing the strongly oxidizing salt solution and the organic wastewater and passing the mixed solution through the photothermal coupled activation degradation system, and subjecting the mixed solution to photothermal activation degradation by the photothermal coupled activation degradation system.

Furthermore, the photothermal coupled activation degradation system includes a concentrating panel and an activation pipeline, and the activation pipeline is disposed on a concentrating side of the concentrating panel. The activation pipeline includes a pipeline body made of a base material and a film layer material plated on an outer side of the pipeline body. The base material is selected from any one of stainless steel, Al, Si, glass, and Cu. The film layer material sequentially includes, from inside to outside, an anti-infrared reflection layer, an absorption layer, and an anti-reflection layer. A material of the absorption layer is a composite material composed of one or more of Co, Ti, Cr, Ni, and Si and their nitrides, oxides, and transition metals. The material of the absorption layer is mainly characterized by high solar energy absorptivity and low infrared emission, etc., but also has relativelyhigh thermal stability and corrosion resistance. Specifically, the material of the absorption layer may include TiₓSi_{y}N, WTi-Al₂O₃, ZrSiON, CrAlON, TiZrON, TiVCrAlZrN, or the like_{.} A material of the anti-reflection layer is selected from one of SiO₂, Cr₂O₃, Al₂O₃, SiO, Si₃N₄, TiO₂, ZrO₂, MgO, and MgF₂. The material of the anti-reflection layer is mainly used to increase the absorption rate of the absorption layer for sunlight. A material of the anti-infrared reflection layer is selected from one of Ni, Cu, Mo, Au, Ag, W, and Al. On one hand, the material of the anti-infrared reflection layer is used to reduce the thermal emissivity rate of the material; on the other hand, the material of the anti-infrared reflection layer serves as a barrier layer to prevent the diffusion of metals and other elements between the absorption layer and the substrate.

An activation reaction of a high-valence strongly oxidizing inorganic salt occurs in the photothermal coupled activation degradation, the activation reaction may activate the strongly oxidizing salt delivered in the electrochemical synthesis system into an active substance, and mineralize organic pollutants into small molecules or carbon dioxide and water. The wastewater in the electrochemical oxidation degradation system flows in a direction from the cathode to the anode. After the high-valence strongly oxidizing inorganic salt is activated by photothermal coupling, the high-valence strongly oxidizing inorganic salt enters the cathode, thereby improving the degradation efficiency.

Furthermore, the method for resource recycling of high-salinity wastewater by the solar-enhanced electrochemical treatment process further includes utilizing a solar photothermal system to provide light energy and thermal energy, and the phase change heat storage system is configured to collect excess heat generated by the solar photothermal system and provide the thermal energy for the evaporation and concentration in S4.

Furthermore, in the step S4, the high-salinity concentrate generated by evaporation and concentration of electrochemically oxidized and degraded organic wastewater is injected into a raw liquid adjustment system for electrochemical synthesis, and distilled water generated by condensation is further collected and utilized.

Furthermore, in the step S4, the evaporation and concentration are performed by utilizing the thermal energy provided by the solar photothermal system.

Furthermore, the strongly oxidizing salt solution generated in the step S1 and/or the step S5 is subjected to evaporation and crystallization to obtain the strongly oxidizing salt.

Furthermore, the method for resource recycling of high-salinity wastewater by a solar-enhanced electrochemical treatment process further includes utilizing a solar photovoltaic system to supply power to the strongly oxidizing salt solution electrosynthesis system and the electrochemical oxidation degradation system.

Beneficial effect of the present disclosure:
The method for resource recycling of high-salinity wastewater by the solar-enhanced electrochemical treatment process of the present disclosure is achieved by electrochemically oxidizing the high-salinity wastewater into the strongly oxidizing salt solution, then the strongly oxidizing salt solution mixes with the organic wastewater, and by photothermal coupled activation catalyzing and electrochemical oxidation degradation, the resourceful utilization of the high-salinity wastewater is realized. In the treatment process of refractory organic wastewater, no additional chemical reagents or energy are required, thereby greatly saving the treatment cost and significantly improving the treatment efficiency. And the organic wastewater that has been activated by the photothermal coupled activation degradation system is more efficiently oxidized by electrocatalysis. In practical applications, the method can be effectively applied to the degradation of organic pollutants such as drugs, PPCPs, and microorganisms such as algae and pathogens. By using the composite activation manner of photothermal coupling, under appropriate activation conditions, the removal efficiency of organic pollutants can reach 99.9%, which is several times higher than that when no activation is applied. Low-value salts generated from the organic wastewater by electrocatalytic oxidation degradation are evaporated using a solar photothermal system, and the resulting salt-containing wastewater is concentrated and recycled, while the distilled water obtained by condensation is collected. The salt-containing wastewater and the strongly oxidizing agent generated in the operation process are efficiently recycled, with no by-products produced.

### BRIEF DESCRIPTION OF THE DRAWINGS

The present disclosure is further described below in connection with the accompanying drawings and embodiments.
FIG. 1 is a flowchart illustrating a resource recycling method according to some embodiments of the present disclosure; and

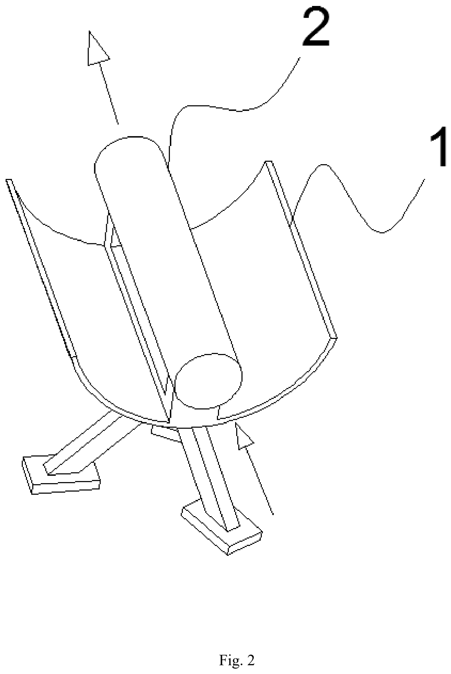

FIG. 2 is a schematic diagram illustrating a structure of a photothermal coupled activation degradation system.

### DETAILED DESCRIPTION

The present disclosure is described in further detail below by means of the accompanying drawings and embodiments. Through these descriptions, the features and advantages of the present disclosure will become clearer and more explicit. Obviously, the described embodiments are only a part of the embodiments of the present disclosure, and not all of them.

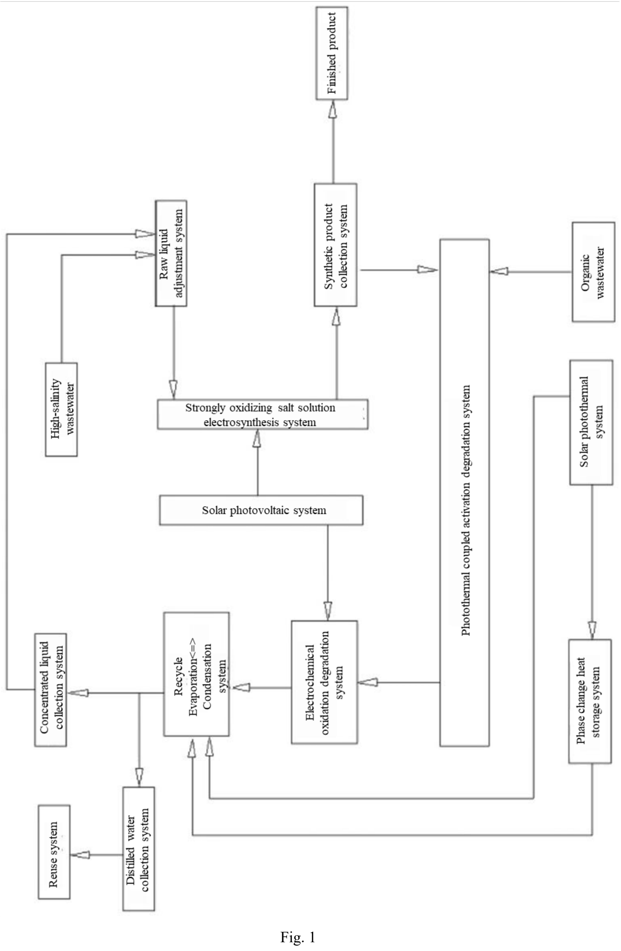

Referring to FIG. 1, the present disclosure provides a method for resource recycling of high-salinity wastewater by a solar-enhanced electrochemical treatment process, including: step S1: subjecting the high-salinity wastewater to an ion membrane electrolysis process to generate a strongly oxidizing salt solution A; step S2: mixing the strongly oxidizing salt solution A with organic wastewater to obtain a mixed solution, and activating and degrading the mixed solution with a photothermal coupled activation degradation system to obtain an activated and degraded solution; step S3: degrading the activated and degraded solution through an electrochemical oxidation degradation system to obtain a high-salinity solution; step S4: evaporating and concentrating the high-salinity solution to obtain a high-salinity concentrate; step S5: subjecting the high-salinity concentrate to the ion membrane electrolysis process to generate a strongly oxidizing salt solution B; and step S6: re-starting step S2 by using the strongly oxidizing salt solution B as the strongly oxidizing salt solution A and repeating step S2 to step S5. In some embodiments, the strongly oxidizing salt solution is presented as oxidized salt solution.

The ion membrane electrolysis process in the step S1 uses a strongly oxidizing salt solution electrosynthesis system, the strongly oxidizing salt solution electrosynthesis system includes a cathode region and an anode region separated by a cation membrane. The strongly oxidizing salt solution is generated by electrolysis in the anode region. A process for photothermal coupled activation degradation in the step S2 includes: mixing the strongly oxidizing salt solution and the organic wastewater and passing the mixed solution through the photothermal coupled activation degradation system, and subjecting the mixed solution to photothermal activation degradation by the photothermal coupled activation degradation system. The method further includes utilizing a phase change heat storage system and a solar photothermal system to provide light energy and thermal energy. The solar photothermal system is configured to provide thermal energy for the photothermal coupled activation degradation system. The phase change heat storage system is configured to collect excess heat generated by the solar photothermal system and provide thermal energy for the photothermal coupled activation in the step S2 and the evaporation and concentration in the step S4.

In the step S4, the high-salinity concentrate generated by evaporation and concentration of electrochemically oxidized and degraded organic wastewater is injected into a raw liquid adjustment system, and distilled water generated by condensation is further collected and utilized. In the step S4, the evaporation and concentration are performed by utilizing the thermal energy provided by the solar photothermal system. The strongly oxidizing salt solution generated in the step S1 and/or the step S5 is subjected to evaporation and crystallization to obtain a strongly oxidizing salt. The method further includes utilizing a solar photovoltaic system to supply power to the strongly oxidizing salt solution electrosynthesis system and the electrochemical oxidation degradation system. Using the solar photovoltaic system to supply power to the electrochemical oxidation degradation system and the strongly oxidizing salt solution electrosynthesis system allows the system to be fully powered by clean energy, thereby greatly reducing operational energy consumption and costs.

Preferably, the photothermal coupled activation degradation system includes a concentrating panel (1) and an activation pipeline (2).The concentrating panel is of a compound parabolic type. The activation pipeline is disposed on a concentrating side of the concentrating panel. The activation pipeline includes a pipeline body made of a base material and a film layer material plated on an outer side of the pipeline body. The base material is selected from any one of stainless steel, Al, Si, glass, and Cu. The film layer material sequentially includes, from inside to outside, an anti-infrared reflection layer, an absorption layer, and an anti-reflection layer. A material of the absorption layer is a composite material composed of one or more of Co, Ti, Cr, Ni, and Si and their nitrides, oxides, and transition metals. The material of the absorption layer may include TiₓSi_{y}N, WTi-Al₂O₃, ZrSiON, CrAlON, TiZrON, TiVCrAlZrN, etc., for improving solar energy absorption and reducing near-infrared emission, thereby improving the thermal stability and corrosion resistance of the materials. The material of the anti-reflection layer is selected from one of SiO₂, Cr₂O₃, Al₂O₃, SiO, Si₃N₄, TiO₂, ZrO₂, MgO, and MgF₂.The material of the anti-reflection layer is used to increase an absorption rate of the absorbing layer for sunlight. The material of the anti-infrared reflection layer is selected from one of Ni, Cu, Mo, Au, Ag, W, and Al. The material of the anti-infrared reflection layer is used to reduce the thermal emissivity rate of the material and to act as a barrier layer to prevent the diffusion of metals and other elements between the absorption layer and the substrate.

Preferably, the cathode region includes a cathode module, and the anode region includes an anode module. The anode module is a single ultra-high oxygen evolution potential non-active electrode or a composite electrode composed of a plurality of ultra-high oxygen evolution potential non-active electrodes. Material of the cathode module is selected from one or more of stainless steel, titanium, niobium, tantalum, zirconium, copper, nickel, cobalt, tungsten, molybdenum, chromium, iron, gold, and silver.

The single ultra-high oxygen evolution potential non-active electrode or the composite electrode is selected from one or a combination of a boron-doped diamond electrode array, a distributed boron-doped diamond/metal-based composite electrode, a titanium suboxide/doped diamond electrode, a doped diamond-ruthenium oxide coupled electrode, an iridium oxide-doped diamond dual-layer electrode, and a doped diamond-ruthenium oxide composite coating electrode.

The cathode module includes a plurality of cathode electrode plates, and the anode module includes a plurality of anode electrode plates. An area ratio of a cathode electrode plate to an anode electrode plate is greater than or equal to 2.

The distributed boron-doped diamond/metal-based composite electrode includes a metal sheet and a plurality of boron-doped diamond electrode plates distributed at intervals on a surface of the metal sheet. A lead suboxide coating is provided between the metal sheet and the plurality of boron-doped diamond electrode plates. The metal sheet is selected from one of a titanium-clad copper sheet, a tantalum-clad copper sheet, a titanium sheet, a niobium sheet, a tantalum sheet, and a zirconium sheet. A structure of the metal sheet is selected from one of a continuous plate shape, a mesh shape, a discontinuous frame shape, a columnar shape, a barrel shape, an irregular three-dimensional shape, and a regular three-dimensional shape.

The titanium suboxide/doped diamond electrode includes a substrate and an electrode working layer disposed on a surface of the substrate; the electrode working layer is composed of a titanium suboxide layer and a doped diamond layer. Titanium suboxide in the titanium suboxide layer is Magnéli phase titanium suboxide. A chemical formula of titanium oxide in the titanium suboxide layer is TiₙO₂ₙ₋ₓ, where n is 1-5, x is 0-3.Doped diamond particles are dispersed in the titanium suboxide layer. In the electrode working layer, from bottom to top, the titanium suboxide layer and the doped diamond layer are sequentially arranged; or from bottom to top, the doped diamond layer and the titanium suboxide layer are sequentially arranged.

The doped diamond-ruthenium oxide coupled electrode includes a substrate and an electrode working layer disposed on a surface of the substrate, and the electrode working layer has a double-layer film structure, from bottom to top, sequentially a ruthenium oxide layer and a doped diamond layer. The ruthenium oxide layer is composed of a ruthenium oxide matrix and doped diamond particles uniformly dispersed in the ruthenium oxide matrix.

The iridium oxide-doped diamond dual-layer electrode includes a substrate and an electrode working layer disposed on a surface of the substrate. The electrode working layer is composed of an iridium oxide layer and a doped diamond layer. The iridium oxide layer is composed of an iridium oxide matrix and doped diamond particles uniformly dispersed in the iridium oxide matrix.

The doped diamond-ruthenium oxide composite coating electrode includes a substrate and an electrode working layer disposed on a surface of the substrate. The electrode working layer has a double-layer film structure, from bottom to top, sequentially a doped diamond layer and a ruthenium oxide layer. The ruthenium oxide layer is added with doped diamond particles.

A doping element in the doped diamond layer is selected from at least one of boron, nitrogen, phosphorus, and lithium. A doping manner of the doped diamond layer is selected from at least one of constant doping, multi-layer variable doping, and gradient doping. A mass fraction of the doping element in the doped diamond layer is 2‰-10‰.

In summary, the present embodiment of the method for resource recycling of high-salinity wastewater by the solar-enhanced electrochemical treatment process is capable of realizing resource utilization of high-salinity wastewater, degrading refractory organic wastewater without the need for additional chemical reagents and energy, thereby greatly saving the treatment cost, and significantly improving the treatment efficiency. And the organic wastewater activated by the photothermal coupled activation degradation system has a higher efficiency of electrocatalytic oxidation. The salt-containing wastewater and the oxidizing agent generated during the operation are efficiently recycled, with no by-products produced.

Finally, it is stated that the above embodiments are only used to illustrate the technical solutions of the present disclosure and are not limitations, and although the present disclosure has been described in detail with reference to the preferred embodiments, it should be understood by a person of ordinary skilled in the art that modifications or equivalent substitutions can be made to the technical solutions of the present disclosure and without departing from the purpose and scope of the technical solutions of the present disclosure, which should be covered by the scope of the claims of the present disclosure.

## Claims

1. A method for resource recycling of high-salinity wastewater by a solar-enhanced electrochemical treatment process, comprising:
step S1: subjecting the high-salinity wastewater to an ion membrane electrolysis process to generate a strongly oxidizing salt solution A;
step S2: mixing the strongly oxidizing salt solution A with organic wastewater to obtain a mixed solution, and activating and degrading the mixed solution with a photothermal coupled activation degradation system to obtain an activated and degraded solution;
step S3: degrading the activated and degraded solution through an electrochemical oxidation degradation system to obtain a high-salinity solution;
step S4: evaporating and concentrating the high-salinity solution to obtain a high-salinity concentrate;
step S5: subjecting the high-salinity concentrate to the ion membrane electrolysis process to generate a strongly oxidizing salt solution B; and
Step S6: re-starting step S2 by using the strongly oxidizing salt solution B as the strongly oxidizing salt solution A and repeating step S2 to step S5.

2. The method according to claim 1, wherein the ion membrane electrolysis process in the step S1 uses a strongly oxidizing salt solution electrosynthesis system, the strongly oxidizing salt solution electrosynthesis system includes a cathode region and an anode region separated by a cation membrane, and the strongly oxidizing salt solution is generated by electrolysis in the anode region.

3. The method according to claim 2, wherein the cathode region includes a cathode module, the anode region includes an anode module, the anode module is a single ultra-high oxygen evolution potential non-active electrode or a composite electrode composed of a plurality of ultra-high oxygen evolution potential non-active electrodes, and material of the cathode module is selected from one or more of stainless steel, titanium, niobium, tantalum, zirconium, copper, nickel, cobalt, tungsten, molybdenum, chromium, iron, gold, and silver;
the single ultra-high oxygen evolution potential non-active electrode or the composite electrode is selected from one or a combination of a boron-doped diamond electrode array, a distributed boron-doped diamond/metal-based composite electrode, a titanium suboxide/doped diamond electrode, a doped diamond-ruthenium oxide coupled electrode, an iridium oxide-doped diamond dual-layer electrode, and a doped diamond-ruthenium oxide composite coating electrode; and
the cathode module includes a plurality of cathode electrode plates, the anode module includes a plurality of anode electrode plates, and an area ratio of a cathode electrode plate to an anode electrode plate is greater than or equal to 2.

4. The method according to claim 3, wherein the distributed boron-doped diamond/metal-based composite electrode includes a metal sheet and a plurality of boron-doped diamond electrode plates distributed at intervals on a surface of the metal sheet, a lead suboxide coating is provided between the metal sheet and the plurality of boron-doped diamond electrode plates, and the metal sheet is selected from one of a titanium-clad copper sheet, a tantalum-clad copper sheet, a titanium sheet, a niobium sheet, a tantalum sheet, and a zirconium sheet; a structure of the metal sheet is selected from one of a continuous plate shape, a mesh shape, a discontinuous frame shape, a columnar shape, a barrel shape, an irregular three-dimensional shape, and a regular three-dimensional shape;
the titanium suboxide/doped diamond electrode includes a substrate and an electrode working layer disposed on a surface of the substrate, the electrode working layer is composed of a titanium suboxide layer and a doped diamond layer, titanium suboxide in the titanium suboxide layer is Magnéli phase titanium suboxide, a chemical formula of titanium oxide in the titanium suboxide layer is TiₙO₂ₙ₋ₓ, wherein n is 1-5, x is 0-3, and doped diamond particles are dispersed in the titanium suboxide layer; in the electrode working layer, from bottom to top, the titanium suboxide layer and the doped diamond layer are sequentially arranged; or from bottom to top, the doped diamond layer and the titanium suboxide layer are sequentially arranged;
the doped diamond-ruthenium oxide coupled electrode includes a substrate and an electrode working layer disposed on a surface of the substrate, the electrode working layer has a double-layer film structure, from bottom to top, sequentially a ruthenium oxide layer and a doped diamond layer, and the ruthenium oxide layer is composed of a ruthenium oxide matrix and doped diamond particles uniformly dispersed in the ruthenium oxide matrix;
the iridium oxide-doped diamond dual-layer electrode includes a substrate and an electrode working layer disposed ona surface of the substrate, the electrode working layer is composed of an iridium oxide layer and a doped diamond layer, and the iridium oxide layer is composed of an iridium oxide matrix and doped diamond particles uniformly dispersed in the iridium oxide matrix;
the doped diamond-ruthenium oxide composite coating electrode includes a substrate and an electrode working layer disposed on a surface of the substrate, the electrode working layer has a double-layer film structure, from bottom to top, sequentially a doped diamond layer and a ruthenium oxide layer, and the ruthenium oxide layer is added with doped diamond particles; and
a doping element in the doped diamond layer is selected from at least one of boron, nitrogen, phosphorus, and lithium, a doping manner of the doped diamond layer is selected from at least one of constant doping, multi-layer variable doping, and gradient doping, and a mass fraction of the doping element in the doped diamond layer is 2‰-10‰.

5. The method according to claim 1, wherein a process for photothermal coupled activation degradation in the step S2 includes: mixing the strongly oxidizing salt solution and the organic wastewater and passing the mixed solution through the photothermal coupled activation degradation system, and subjecting the mixed solution to photothermal activation degradation by the photothermal coupled activation degradation system.

6. The method according to claim 1, wherein the photothermal coupled activation degradation system includes a concentrating panel (1) and an activation pipeline (2), the concentrating panel is of a compound parabolic type, and the activation pipeline is disposed on a concentrating side of the concentrating panel; the activation pipeline includes a pipeline body made of a base material and a film layer material plated on an outer side of the pipeline body; the base material is selected from any one of stainless steel, Al, Si, glass, and Cu; the film layer material sequentially includes, from inside to outside, an anti-infrared reflection layer, an absorption layer, and an anti-reflection layer; a material of the absorption layer is a composite material composed of one or more of Co, Ti, Cr, Ni, and Si and their nitrides, oxides, and transition metals; a material of the anti-reflection layer is selected from one of SiO₂, Cr₂O₃, Al₂O₃, SiO, Si₃N₄, TiO₂, ZrO₂, MgO, and MgF₂; a material of the anti-infrared reflection layer is selected from one of Ni, Cu, Mo, Au, Ag, W, and Al.

7. The method according to claim 1, further comprising utilizing a phase change heat storage system and a solar photothermal system to provide thermal energy for the activating and degrading in the step S2 and the evaporating and concentrating in the step S4, wherein the phase change heat storage system is configured to collect excess heat generated by the solar photothermal system.

8. The method according to claim 1, wherein in the step S4, the high-salinity concentrate generated by evaporation and concentration of electrochemically oxidized and degraded organic wastewater is reinjected into a raw liquid adjustment system; and distilled water generated by condensation is further collected and utilized.

9. The method according to claim 7, wherein in the step S4, the evaporation and concentration are performed by utilizing the thermal energy provided by the solar photothermal system.

10. The method according to claim 1, wherein the strongly oxidizing salt solution generated in the step S1 and/or the step S5 is subjected to evaporation and crystallization to obtain a strongly oxidizing salt.

11. The method according to any one of claims 2 to 10, further comprising utilizing a solar photovoltaic system to supply power to the strongly oxidizing salt solution electrosynthesis system and the electrochemical oxidation degradation system.
